# EUROPÄISCHE PATENTSCHRIFT

(11) **EP 2 292 536 B1**
(45) Veröffentlichungstag und Bekanntmachung des Hinweises auf die Patenterteilung: **12.06.2019**
(21) Anmeldenummer: 10169222.6
(22) Anmeldetag: 12.07.2010
(51) Int. Cl.: B65G 21/20

(54) **Transportvorrichtung zum Transportieren von Gefäßverschlüssen**
Transport device for transporting container caps
Dispositif de transport destiné au transport de fermetures de récipient

(30) Priorität: 07.09.2009 DE 102009040364
(43) Veröffentlichungstag der Anmeldung: 09.03.2011
(73) Patentinhaber: Krones AG, 93073 Neutraubling (DE)
(72) Erfinder: Heigl, Stefan, 94345, Aholfing (DE); Lorenz, Dieter, 93053, Regensburg (DE); Sowislo, Peter, 93049, Regensburg (DE)
(74) Vertreter: Grünecker Patent- und Rechtsanwälte PartG mbB

(56) Entgegenhaltungen:
- WO-A1-03/042075
- JP-A- H10 258 920
- JP-U- S5 451 782
- JP-U- S61 105 310
- US-B1- 6 360 880

## Beschreibung

Die Erfindung betrifft eine Transportvorrichtung zum Transportieren von Gefäßverschlüssen, insbesondere von Flaschenverschlüssen.

Beim Transport von Gefäßverschlüssen mit einem Fördermedium werden häufig seitliche Führungsgeländer verwendet, um die Gefäßverschlüsse entlang eines vorherbestimmten Weges zu führen. Bei Bedarf wird außerdem ein Niederhalter eingesetzt, der die Gefäßverschlüsse von oben führt.

So ist beispielsweise aus der DE 2 215 880 ein Förderer für Verschlusskappen und dergleichen bekannt, umfassend zwei seitliche Führungsschienen und eine obere Führungsschiene.

Weitere Transportvorrichtungen sind aus der JP H10 258920 A, der WO 03/042075 A1, der US 6,360,880 B1 und der JP S54 51782 U bekannt. Die JP S61 105310 U beschreibt eine Transportvorrichtung nach dem Oberbegriff des Anspruchs 1.

Um das Fördermedium und die zu transportierenden Gefäßverschlüsse vor Verschmutzungen zu schützen, wird zusätzlich meistens eine Staubschutzabdeckung angebracht. Eine solche Staubschutzabdeckung ist beispielsweise aus der DE 295 07 741 bekannt.

Durch die zusätzliche Staubschutzabdeckung werden Arbeiten an den Führungsgeländern, beispielsweise zu Wartungszwecken oder bei eventuellen Verklemmungen der Gefäßverschlüsse in der Transportvorrichtung, erschwert. So muss bei eventuellen Verklemmungen der Gefäßverschlüsse zunächst die Staubschutzabdeckung und gegebenenfalls ein vorhandener Niederhalter entfernt werden. Dies ist aufwendig und kann zu längeren Stillstandszeiten der Transportvorrichtung führen.

Daher ist es Aufgabe der vorliegenden Erfindung, eine Transportvorrichtung zum Transportieren von Gefäßverschlüssen bereitzustellen, welche einfacher zu handhaben ist. Diese Aufgabe wird durch den Gegenstand des Patentanspruchs 1 gelöst. Vorteilhafte Weiterbildungen finden sich in den abhängigen Ansprüchen.

Die erfindungsgemäße Transportvorrichtung zum Transportieren von Flaschenverschlüssen umfasst eine Fördereinrichtung mit einem Fördermedium und eine über dem Fördermedium angeordnete Führungsschiene, wobei die Führungsschiene eine dem Fördermedium zugewandte Aussparung aufweist.

Durch die Aussparung in der Führungsschiene kann die Führungsschiene gleichzeitig als seitliche Führung für die Gefäßverschlüsse, als Niederhalter und als Staubschutzabdeckung dienen. Dadurch wird der Aufbau der Transportvorrichtung und infolge dessen deren Handhabbarkeit vereinfacht.

Die Gefäßverschlüsse hierin sind Verschlüsse von Flaschen, beispielsweise Glas- oder Kunststoffflaschen. Die Gefäßverschlüsse können Drehverschlüsse, Korken, Kronkorken oder andere Verschlusskappen sein.

Die Fördereinrichtung kann ein Transportiersystem sein. Das Fördermedium kann Mattenketten umfassen. Die Fördereinrichtung kann einem Schanierbandkettenförderer oder einem Gurtförderer entsprechen. Kettenförderer bieten den Vorteil, gekrümmte Förderwege zu ermöglichen. Die Fördereinrichtung kann Riemenbänder umfassen. Das Fördermedium kann ein Förderband sein.

Die Breite des Fördermediums kann der Breite der zu transportierenden Gefäßverschlüsse entsprechen. Wenn mehrere Gefäßverschlüsse nebeneinander in Förderrichtung transportiert werden sollen, kann die Breite des Fördermediums einem Vielfachen der Breite eines Gefäßverschlusses entsprechen. Insbesondere kann das Vielfache der Anzahl der parallel zu transportierenden Gefäßverschlüsse entsprechen.

Die Führungsschiene kann derart über dem Fördermedium angeordnet sein, dass die zu transportierenden Gefäßverschlüsse im Betrieb der Transportvorrichtung wenigstens teilweise in der Aussparung der Führungsschiene angeordnet sind.

Die Aussparung kann einer Nut oder Ausfräsung entsprechen.

Die Aussparung kann entlang einer Längsachse der Führungsschiene ausgebildet sein. Insbesondere kann die Längsachse parallel zur Förderrichtung des Fördermediums verlaufen. Mit anderen Worten kann die Aussparung sich entlang der Förderrichtung der zu transportierenden Gefäßverschlüsse erstrecken.

Die Kontur der Aussparung kann in einem Querschnitt senkrecht zur Längsachse der Führungsschiene weitgehend der Form der zu transportierenden Gefäßverschlüsse entsprechen.

Insbesondere kann die Breite der Aussparung senkrecht zur Längsachse der Führungsschiene der Breite der zu transportierenden Gefäßverschlüsse entsprechen. Dadurch können die zu transportierenden Gefäßverschlüsse von der Führungsschiene seitlich geführt werden.

Die Aussparung umfasst Seitenflächen und eine Deckfläche, wobei die Deckfläche parallel zur Fläche des Fördermediums angeordnet ist. Die Seitenwände der Aussparung können der seitlichen Führung der Gefäßverschlüsse dienen und die obere Fläche der Aussparung kann die Funktion eines Niederhalters haben.

Die Aussparung kann in einem Querschnitt senkrecht zur Längsachse der Führungsschiene rechteckig oder quadratisch sein. Insbesondere kann die Führungsschiene die Form eines U aufweisen. Mit anderen Worten, die Führungsschiene kann einem U-Profil entsprechen.

Die Aussparung ist eine erste Aussparung und eine zweite Aussparung verläuft parallel zur ersten Aussparung. Dadurch können auf dem Fördermedium zwei Gefäßverschlüsse parallel geführt werden. Die Aussparung kann auch eine oder mehrere weitere Aussparungen umfassen.

Die Kontur der ersten Aussparung, insbesondere in einem Querschnitt senkrecht zur Längsachse der Führungsschiene, ist ungleich der Kontur der zweiten Aussparung, insbesondere in einem Querschnitt senkrecht zur Längsachse der Führungsschiene. Dadurch können unterschiedliche Gefäßverschlüsse parallel auf dem Fördermedium geführt werden.

Die Führungsschiene kann eine Krümmung aufweisen, insbesondere längs der Längsachse der Führungsschiene. Dadurch können die Gefäßverschlüsse längs gekrümmter Wege, beispielsweise in Kurven, geführt werden.

Die Transportvorrichtung kann außerdem ein erstes Fixierelement und ein zweites Fixierelement umfassen, wobei das erste Fixierelement mit der Führungsschiene verbunden ist, wobei das zweite Fixierelement mit der Fördereinrichtung verbunden ist und wobei das erste und das zweite Fixierelement, insbesondere formschlüssig, in Eingriff gebracht sind. Durch eine derartige Fixiereinrichtung kann die Führungsschiene in Position gehalten werden.

Insbesondere kann das erste Fixierelement an der Oberseite der Führungsschiene angeordnet sein und/oder das zweite Fixierelement an Seitenwänden der Fördereinrichtung angeordnet sein. Das erste und/oder zweite Fixierelement können mit der Führungsschiene beziehungsweise mit der Fördereinrichtung durch Schrauben, Schnellverschlüsse und/oder andere Befestigungsmittel, insbesondere direkt oder unmittelbar, verbunden sein.

Das erste und das zweite Fixierelement können derart in Eingriff gebracht sein, dass eine Verbindung des ersten und zweiten Fixierelements in einer Richtung, insbesondere in einer Richtung senkrecht zum Fördermedium, nur durch die Schwerkraftwirkung bedingt wird. Dadurch ist es möglich, den Eingriff des ersten und zweiten Fixierelements ohne Einsatz von Werkzeug zu lösen. Dadurch kann beispielsweise eine Führungsschiene einfach ausgetauscht werden oder bei einer Verklemmung von Gefäßverschlüssen diese auf einfache Weise behoben werden. Das erste und/oder zweite Fixierelement können derart ausgebildet sein, dass der vertikale Abstand der Führungsschiene zum Fördermedium variabel einstellbar ist, insbesondere wobei die vertikale Position des zweiten Fixierelements an der Fördereinrichtung variabel einstellbar ist.

Der Abstand der Führungsschiene zum Fördermedium kann insbesondere der kleinste Abstand der Führungsschiene vom Fördermedium sein. Insbesondere können durch die Führungsschiene mehrere parallele Ebenen parallel zum Fördermedium definiert sein. Der vertikale der Abstand der Führungsschiene vom Fördermedium kann der kleinste oder der größte Abstand zwischen einer der parallelen Ebenen und dem Fördermedium sein.

Der vertikale Abstand der Führungsschiene vom Fördermedium kann insbesondere derart gewählt sein, dass ein Gefäßverschluss mit Sicherheitsring geführt wird während ein Gefäßverschluss ohne Sicherheitsring nicht geführt wird.

Die Transportvorrichtung kann außerdem einen Hubmotor umfassen, wobei der Hubmotor den vertikalen Abstand der Führungsschiene vom Fördermedium, insbesondere die vertikale Position des zweiten Fixierelements variieren kann. Dadurch ist eine automatische Höheneinstellung beispielsweise beim Wechsel von Gefäßverschlüssen möglich.

Die Transportvorrichtung kann mehrere Führungsschienen umfassen, insbesondere wobei jede Führungsschiene über dem Fördermedium angeordnet ist und wobei jede Führungsschiene eine dem Fördermedium zugewandte Aussparung aufweist. Insbesondere können die verschiedenen Führungsschienen für das Führen unterschiedlicher Gefäßverschlüsse ausgebildet sein.

Das oben beschriebene erste Fixierelement kann mit mehreren Führungsschienen verbunden sein. Dadurch können mehrere Führungsschienen mit einer Fixiereinrichtung in Position gehalten werden.

Die Erfindung stellt außerdem eine Verwendung einer Führungsschiene zum Transportieren von Flaschenverschlüssen nach Anspruch 10 bereit. Die Führungsschiene kann eines oder mehrere der oben genannten Merkmale aufweisen. Insbesondere kann die Führungsschiene zusammen mit einer Fördereinrichtung mit einem Fördermedium, wie oben beschrieben, verwendet werden.

Offenbart ist außerdem ein Verfahren zum Transportieren von Gefäßverschlüssen insbesondere von Flaschenverschlüssen, umfassend das Bereitstellen einer oben beschriebenen Transportvorrichtung.

Das Verfahren kann außerdem ein Anpassen der Führungsschiene und/oder der Aussparung der Führungsschiene an die zu transportierenden Gefäßverschlüsse umfassen.

Der vertikale Abstand der Führungsschiene vom Fördermedium kann derart eingestellt werden, dass gewünschte Gefäßverschlüsse geführt werden während defekte oder unvollständige Gefäßverschlüsse nicht geführt werden.

Außerdem kann das Verfahren eines oder mehrere der oben im Zusammenhang mit der Transportvorrichtung beschriebenen Merkmale umfassen. Das Verfahren kann insbesondere mit einer der oben beschriebenen Transportvorrichtungen verwendet werden.

Weitere Merkmale und Vorteile werden nachfolgend anhand der beispielhaften Figuren erläutert. Dabei zeigt
- Figur 1: eine perspektivische Ansicht einer beispielhaften Transportvorrichtung;
- Figur: 2 einen Querschnitt einer beispielhaften Transportvorrichtung;
- Figur 3: einen Querschnitt einer beispielhaften Transportvorrichtung und einer Fixiereinrichtung; und
- Figur 4: einen Querschnitt einer beispielhaften Transportvorrichtung und beispielhafter Gefäßverschlüsse mit Sicherheitsring.

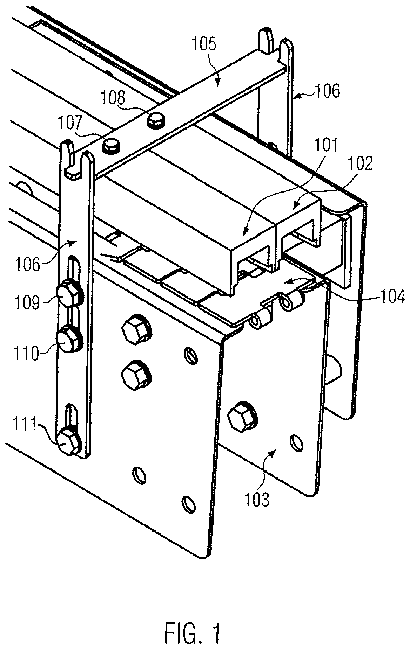

Figur 1 illustriert eine beispielhafte Transportvorrichtung zum Transportieren von Flaschenverschlüssen. Dabei zeigt Figur 1 eine Fördereinrichtung 103 umfassend ein Fördermedium 104. Über dem Fördermedium 104 sind zwei Führungsschienen 101 und 102 angeordnet, wobei jede der Führungsschienen 101 und 102 eine dem Fördermedium 104 zugewandte Aussparung umfasst.

Die Führungsschienen sind hier aus dem Kunststoff PEEK gefertigt, indem aus Meterware Abschnitte hergestellt werden und in diese die Aussparungen gefräst werden. Denkbar ist auch die Verwendung jeder anderen Art von Material, welches sich entsprechend formen oder bearbeiten lässt.

Die Führungsschienen 101 und 102 sind mittels einer Fixiereinrichtung in einem vorherbestimmten vertikalen Abstand zum Fördermedium 104 angeordnet. Die Fixiereinrichtung umfasst ein erstes Fixierelement 105, das mit Schrauben 107 bzw. 108 an der ersten Führungsschiene 101 bzw. an der zweiten Führungsschiene 102 befestigt ist. Die Fixiereinrichtung umfasst außerdem ein zweites Fixierelement 106, wobei das zweite Fixierelement 106 an Seitenwänden der Fördereinrichtung 103 angeordnet ist. Das erste Fixierelement 105 und das zweite Fixierelement 106 sind formschlüssig in Eingriff gebracht, wobei das erste Fixierelement 105 in vertikaler Richtung nur durch die Schwerkraftwirkung mit dem zweiten Fixierelement 106 verbunden ist. Durch die Fixiereinrichtung wird sowohl eine seitliche Fixierung als auch eine vertikale Positionierung der Führungsschienen 101 und 102 gewährleistet.

Durch Verstellschrauben 109, 110 und 111 kann die vertikale Position des zweiten Fixierelements 106 variabel eingestellt werden. Dadurch kann der vertikale Abstand der Führungsschienen 101 bzw. 102 vom Fördermedium 104 variabel eingestellt werden. Insbesondere kann der vertikale Abstand der Führungsschienen 101 und 102 vom Fördermedium 104 entsprechend der zu transportierenden Gefäßverschlüsse eingestellt werden.

Anstelle der Schrauben 107, 108, 109, 110 und/oder 111 können auch Schnellverschlüsse oder andere Befestigungsmittel verwendet werden.

Alternativ oder zusätzlich zu den Stellschrauben 109, 110 und 111 kann auch ein Hubmotor zum Verstellen der vertikalen Position des zweiten Fixierelements 106 vorgesehen sein. Dieser Hubmotor kann beispielsweise über eine Füllersteuerung eines mit der Transportvorrichtung verbundenen Füllers angesteuert werden. Dadurch ist eine automatische Anpassung des vertikalen Abstands der Führungsschienen 101, 102 vom Fördermedium 104 an die zu transportierenden Gefäßverschlüsse möglich. Da meist mehrere Führungsschienen 101, 102 mit mehreren ersten und zweiten Fixierelementen (105, 106) in einer Transportvorrichtung verbaut sind, können entsprechend mehrere zweite Fixierelemente mit einem Hubmotor ausgestattet sein. Es ist auch denkbar, dass mehrere zweite Fixierelemente 106 mit einem gemeinsamen Hubmotor in der Höhe verstellt werden. Vorteilhafterweise werden die ein oder mehreren Hubmotoren über eine daran angeschlossene Steuereinrichtung (Füllersteuerung) gemeinsam verstellt. Dazu können in der Steuereinrichtung Gefäßverschluss spezifische Parameter, wie z.B. die Höhe des Gefäßverschlusses mit oder ohne Garantieband oder die Toleranz der Außenabmessungen des Gefäßverschlusses hinterlegt sein, so dass der Bediener einer Anlage mit einer Transportvorrichtung über ein mit der Steuerung verbundenes Bedienterminal bei Produktionsstart nur noch den zu verarbeitenden Gefäßverschlusstyp eingeben muss und dadurch alle Führungsschienen automatisch in die optimale Höheneinstellung verfahren werden.

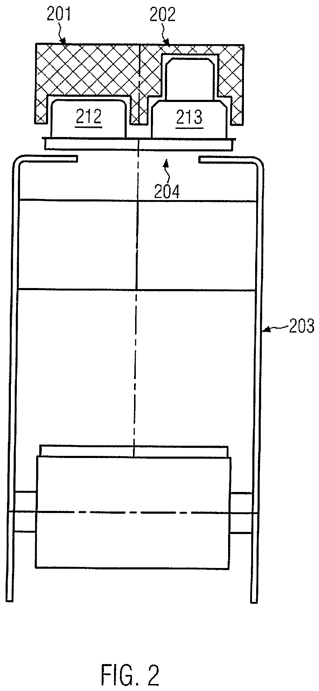

Figur 2 illustriert einen Querschnitt durch eine beispielhafte Transportvorrichtung. Der gezeigte Querschnitt verläuft dabei senkrecht zur Förderrichtung des Fördermedium 204. Insbesondere zeigt Figur 2 die Fördereinrichtung 203 mit Fördermedium 204. Zwei Führungsschienen 201 bzw. 202 sind, wie in Figur 1 gezeigt, über dem Fördermedium 204 angeordnet, wobei die Führungsschienen 201, 202 je eine dem Fördermedium zugewandte Aussparung aufweisen. Die Aussparungen verlaufen dabei entlang einer Längsachse der Führungsschiene, d.h. entlang der Förderrichtung des Fördermediums 204.

Beispielhafte Gefäßverschlüsse 212 bzw. 213 sind wenigstens teilweise in den Aussparungen der Führungsschienen 201 bzw. 202 angeordnet. Die Konturen der Aussparungen entsprechen weitgehend der Form der zu transportierenden Gefäßverschlüsse 212 bzw. 213. Zweckmäßigerweise sind die Abmessungen der Aussparungen so gewählt, dass die Gefäßverschlüsse zwar sicher geführt werden, jedoch auch Gefäßverschlüsse mit größerer Fertigungstoleranz in den Außenabmessungen ungehindert und ohne Verklemmungen entlang der Führungsrinnen geführt werden können.

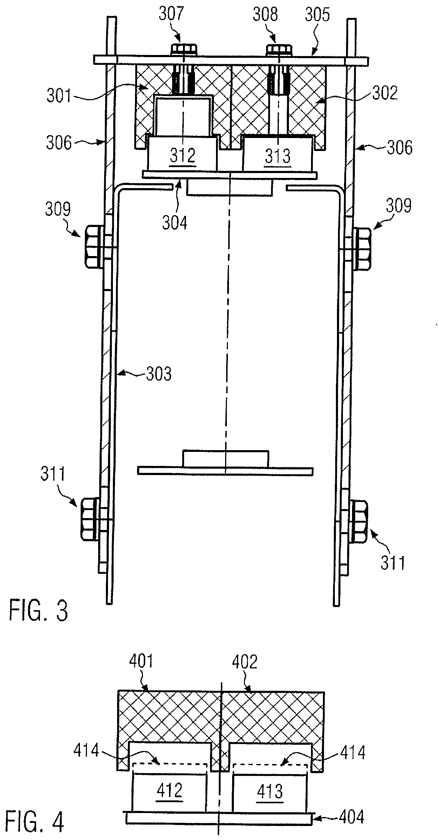

Figur 3 illustriert ebenfalls einen Querschnitt durch eine beispielhafte Transportvorrichtung, wobei neben der Fördereinrichtung 303 mit Fördermedium 304 und deren Führungsschienen 301 bzw. 302 auch noch ein erstes Fixierelement 305 und ein zweites Fixierelement 306 gezeigt sind. Auf dem Fördermedium 304 und teilweise in den Aussparungen gegenüber der Führungsschiene 301, 302 sind beispielhafte Gefäßverschlüsse 312 und 313 gezeigt. Das zweite Fixierelement 306 ist mittels Schrauben 309 und 311 mit der Fördereinrichtung 303, insbesondere mit den Seitenwänden der Fördereinrichtung 303, verbunden. Die Führungsschienen 301 bzw. 302 sind mittels Schrauben 307 bzw. 308 mit dem ersten Fixierelement 305 verbunden.

Figur 4 illustriert einen Querschnitt durch eine beispielhafte Transportvorrichtung mit einem Fördermedium 404 und Führungsschienen 401 und 402, die über dem Fördermedium 404 angeordnet sind und je eine dem Fördermedium 404 zugewandte Aussparung aufweisen. Auf dem Fördermedium 404 sind beispielhafte Gefäßverschlüsse 412, 413 gezeigt, die einen Sicherungsring 414 (gestrichelte Linie) umfassen.

Der vertikale Abstand der Führungsschienen 401, 402 vom Fördermedium 404 ist hier so gewählt, dass Gefäßverschlüsse mit Sicherungsring 414 durch die Führungsschienen 401, 402 seitlich geführt werden, während Gefäßverschlüsse ohne Sicherungsring 414 nicht seitlich geführt werden. Mit anderen Worten ist der minimale Abstand der Führungsschienen 401, 402 vom Fördermedium 404 größer als die Höhe eines Gefäßverschlusses ohne Sicherungsring 414 und kleiner als die Höhe eines Gefäßverschlusses mit Sicherungsring 414.

Durch eine derartige Wahl der Höhe der Führungsschienen 401, 402 können defekte Gefäßverschlüsse, d.h. Gefäßverschlüsse ohne Sicherungsring 414, einfach aussortiert werden, beispielsweise durch Vorsehen einer Kurve in der Förderstrecke, wobei ohne die seitliche Führung durch die Führungsschienen 401, 402 Gefäßverschlüsse ohne Sicherungsring 414 in gerader fäßverschlüsse ohne Sicherungsring, insbesondere wenn die Führungsschienen 401, 402 eine Krümmung aufweisen und das Fördermedium entlang einer geradlinigen Achse verläuft, aus den Führungsschienen ausgeschleust werden und eine Zuführung der Gefäßverschlüsse ohne Garantieband zu einer weiteren Behandlung, z.B. dem Aufschrauben auf eine Flasche, vermieden werden.

Es versteht sich, dass in den zuvor beschriebenen Ausführungsbeispielen genannte Merkmale nicht auf diese speziellen Kombinationen beschränkt sind und wie beansprucht in beliebigen anderen Kombinationen möglich sind. Insbesondere kann die Aussparung der Führungsschiene verschiedene Formen oder Geometrien aufweisen.

## Patentansprüche

1. Transportvorrichtung zum Transportieren von Flaschenverschlüssen (212; 213; 312; 313; 412; 413), umfassend:
eine Fördereinrichtung (103; 203; 303) mit einem Fördermedium (104; 204; 304; 404); und
eine über dem Fördermedium (104; 204; 304; 404) angeordnete Führungsschiene (101; 102; 201; 202; 301; 302; 401; 402), wobei die Führungsschiene (101; 102; 201; 202; 301; 302; 401; 402) eine dem Fördermedium (104; 204; 304; 404) zugewandte Aussparung aufweist;
wobei die Aussparung Seitenflächen und eine Deckfläche umfasst, wobei die Deckfläche parallel zur Fläche des Fördermediums angeordnet ist;
**dadurch gekennzeichnet, dass** die Aussparung eine erste Aussparung ist, und wobei eine zweite Aussparung parallel zur ersten Aussparung verläuft; und
dass die Kontur der ersten Aussparung ungleich der Kontur der zweiten Aussparung ist.

2. Transportvorrichtung nach Anspruch 1, wobei die Aussparung entlang einer Längsachse der Führungsschiene (101; 102; 201; 202; 301; 302; 401; 402) ausgebildet ist.

3. Transportvorrichtung nach Anspruch 1 oder 2, wobei die Kontur der Aussparung in einem Querschnitt senkrecht zur Längsachse der Führungsschiene (101; 102; 201; 202; 301; 302; 401; 402) weitgehend der Form der zu transportierenden Flaschenverschlüsse (212; 213; 312; 313; 412; 413) entspricht.

4. Transportvorrichtung nach einem der vorangegangenen Ansprüche, wobei die Aussparung in einem Querschnitt senkrecht zur Längsachse der Führungsschiene (101; 102; 201; 202; 301; 302; 401; 402) rechteckig oder quadratisch ist.

5. Transportvorrichtung nach einem der vorangegangenen Ansprüche, außerdem umfassend eine Fixiereinrichtung, die Fixiereinrichtung umfassend:
ein erstes Fixierelement (105; 305), wobei das erste Fixierelement (105; 305) mit der Führungsschiene (101; 102; 201; 202; 301; 302; 401; 402) verbunden ist; und
ein zweites Fixierelement (106; 306), wobei das zweite Fixierelement (106; 306) mit der Fördereinrichtung (103; 203; 303) verbunden ist;
wobei das erste (105; 305) und das zweite (106; 306) Fixierelement, insbesondere formschlüssig, in Eingriff gebracht sind.

6. Transportvorrichtung nach Anspruch 5, wobei das erste Fixierelement (105; 305) an der Oberseite der Führungsschiene (101; 102; 201; 202; 301; 302; 401; 402) angeordnet ist und/oder wobei das zweite Fixierelement (106; 306) an Seitenwänden der Fördereinrichtung (103; 203; 303) angeordnet ist.

7. Transportvorrichtung nach Anspruch 5 oder 6, wobei das erste (105; 305) und/oder zweite (106; 306) Fixierelement derart ausgebildet sind, dass der vertikale Abstand der Führungsschiene (101; 102; 201; 202; 301; 302; 401; 402) vom Fördermedium (104; 204; 304; 404) variabel einstellbar ist, insbesondere wobei die vertikale Position des zweiten Fixierelements (106; 306) an der Fördereinrichtung (103; 203; 303) variabel einstellbar ist.

8. Transportvorrichtung nach Anspruch 7, außerdem umfassend einen Hubmotor, wobei der Hubmotor den vertikalen Abstand der Führungsschiene (101; 102; 201; 202; 301; 302; 401; 402) vom Fördermedium (104; 204; 304; 404), insbesondere die vertikale Position des zweiten Fixierelements (106; 306), variiert.

9. Transportvorrichtung nach einem der vorangegangenen Ansprüche, umfassend mehrere Führungsschienen (101; 102; 201; 202; 301; 302; 401; 402), insbesondere wobei jede Führungsschiene (101; 102; 201; 202; 301; 302; 401; 402) über dem Fördermedium (104; 204; 304; 404) angeordnet ist, und wobei jede Führungsschiene (101; 102; 201; 202; 301; 302; 401; 402) eine dem Fördermedium (104; 204; 304; 404) zugewandte Aussparung aufweist.

10. Verwendung einer Transportvorrichtung nach einem der vorangegangenen Ansprüche zum Transportieren von Flaschenverschlüssen (212; 213; 312; 313; 412; 413) auf einem Fördermedium (104; 204; 304; 404).

## Claims

1. Transport device for transporting bottle caps (212; 213; 312; 313; 412; 413), comprising:
a conveying device (103; 203; 303) with a conveying medium (104; 204; 304; 404); and
a guide rail (101; 102; 201; 202; 301; 302; 401; 402) arranged above the conveying medium (104; 204; 304; 404), the guide rail (101; 102; 201; 202; 301; 302; 401; 402) having a recess facing the conveying medium (104; 204; 304; 404),
the recess having side surfaces and a cover surface, the cover surface being arranged parallel to the surface of the conveying medium,
**characterized in that**
the recess is a first recess, and wherein a second recess extends parallel to the first recess; and
that the contour of the first recess is different from the contour of the second recess.

2. Transport device according to claim 1, wherein the recess is formed along a longitudinal axis of the guide rail (101; 102; 201; 202; 301; 302; 401; 402).

3. Transport device according to claim 1 or 2, wherein the contour of the recess in a cross-section perpendicular to the longitudinal axis of the guide rail (101; 102; 201; 202; 301; 302; 401; 402) largely corresponds to the shape of the bottle caps (212; 213; 312; 313; 412; 413) to be transported.

4. Transport device according to one of the preceding claims, wherein the recess is rectangular or square in a cross-section perpendicular to the longitudinal axis of the guide rail (101; 102; 201; 202; 301; 302; 401; 402).

5. Transport device according to one of the preceding claims, further comprising a fixing device, the fixing device comprising:
a first fixing element (105; 305), wherein the first fixing element (105; 305) is connected to the guide rail (101; 102; 201; 202; 301; 302; 401; 402); and
a second fixing element (106; 306), wherein the second fixing element (106; 306) is connected to the conveying device (103; 203; 303),
wherein the first (105; 305) and the second (106; 306) fixing elements are brought into engagement, in particular in a positive-locking manner.

6. Transport device according to claim 5, wherein the first fixing element (105; 305) is arranged on the upper side of the guide rail (101; 102; 201; 202; 301; 302; 401; 402) and/or wherein the second fixing element (106; 306) is arranged on side walls of the conveying device (103; 203; 303).

7. Transport device according to claim 5 or 6, wherein the first (105; 305) and/or second (106; 306) fixing element are designed in such a way that the vertical distance of the guide rail (101; 102; 201; 202; 301; 302; 401; 402) from the conveying medium (104; 204; 304; 404) can be variably set, in particular wherein the vertical position of the second fixing element (106; 306) on the conveying device (103; 203; 303) can be variably set.

8. Transport device according to claim 7, further comprising a lifting motor, wherein the lifting motor varies the vertical distance of the guide rail (101; 102; 201; 202; 301; 302; 401; 402) from the conveying medium (104; 204; 304; 404), in particular the vertical position of the second fixing element (106; 306).

9. Transport device according to one of the preceding claims, comprising a plurality of guide rails (101; 102; 201; 202; 301; 302; 401; 402), in particular wherein each guide rail (101; 102; 201; 202; 301; 302; 401; 402) is arranged above the conveying medium (104; 204; 304; 404), and wherein each guide rail (101; 102; 201; 202; 301; 302; 401; 402) has a recess facing the conveying medium (104; 204; 304; 404).

10. Use of a transport device according to one of the preceding claims for transporting bottle caps (212; 213; 312; 313; 412; 413) on a conveying medium (104; 204; 304; 404).

## Revendications

1. Système de transport pour assurer le transport de fermetures de bouteilles (212; 213; 312; 313; 412; 413), comprenant :
un dispositif d'acheminement (103; 203; 303) avec un moyen d'acheminement (104; 204; 304; 404) ; et
une glissière de guidage (101; 102; 201; 202; 301; 302; 401; 402) agencée au-dessus du moyen d'acheminement (104; 204; 304; 404), la glissière de guidage (101; 102; 201; 202; 301; 302; 401; 402) présentant un évidement dirigé vers le moyen d'acheminement (104; 204; 304; 404) ;
système dans lequel l'évidement comporte des surfaces latérales et une surface de recouvrement, la surface de recouvrement étant agencée parallèlement à la surface du moyen d'acheminement ;
**caractérisé**
**en ce que** l'évidement est un premier évidement, et un deuxième évidement s'étend parallèlement au premier évidement ; et
**en ce que** le contour du premier évidement n'est pas égal au contour du deuxième évidement.

2. Système de transport selon la revendication 1, dans lequel l'évidement est réalisé le long d'un axe longitudinal de la glissière de guidage (101; 102; 201; 202; 301; 302; 401; 402).

3. Système de transport selon la revendication 1 ou la revendication 2, dans lequel le contour de l'évidement dans une section transversale perpendiculaire à l'axe longitudinal de la glissière de guidage (101; 102; 201; 202; 301; 302; 401; 402), correspond dans une large mesure à la forme des fermetures de bouteilles (212; 213; 312; 313; 412; 413) à transporter.

4. Système de transport selon l'une des revendications précédentes, dans lequel l'évidement est rectangulaire ou carré, dans une section transversale perpendiculaire à l'axe longitudinal de la glissière de guidage (101; 102; 201; 202; 301; 302; 401; 402).

5. Système de transport selon l'une des revendications précédentes, comprenant, en outre, un dispositif de fixation, le dispositif de fixation comprenant :
un premier élément de fixation (105; 305), le premier élément de fixation (105; 305) étant relié à la glissière de guidage (101; 102; 201; 202; 301; 302; 401; 402) ; et
un deuxième élément de fixation (106; 306), le deuxième élément de fixation (106; 306) étant relié au dispositif d'acheminement (103; 203; 303) ;
le premier (105; 305) et le deuxième (106; 306) élément de fixation étant amenés en prise réciproque, notamment par complémentarité de formes.

6. Système de transport selon la revendication 5, dans lequel le premier élément de fixation (105; 305) est agencé sur le côté supérieur de la glissière de guidage (101; 102; 201; 202; 301; 302; 401; 402), et/ou le deuxième élément de fixation (106; 306) est agencé sur des parois latérales du dispositif d'acheminement (103; 203; 303).

7. Système de transport selon la revendication 5 ou la revendication 6, dans lequel le premier (105; 305) et/ou le deuxième élément de fixation (106; 306) sont conçus de manière telle, que la distance verticale de la glissière de guidage (101; 102; 201; 202; 301; 302; 401; 402) au moyen d'acheminement (104; 204; 304; 404) puisse être réglée de manière variable, notamment que la position verticale du deuxième élément de fixation (106; 306) puisse être réglée de manière variable sur le dispositif d'acheminement (103; 203; 303).

8. Système de transport selon la revendication 7, comprenant, en outre, un moteur de levage, le moteur de levage faisant varier la distance verticale de la glissière de guidage (101; 102; 201; 202; 301; 302; 401; 402) au moyen d'acheminement (104; 204; 304; 404), notamment la position verticale du deuxième élément de fixation (106; 306).

9. Système de transport selon l'une des revendications précédentes, comprenant plusieurs glissières de guidage (101; 102; 201; 202; 301; 302; 401; 402), chaque glissière de guidage (101; 102; 201; 202; 301; 302; 401; 402) étant notamment agencée au-dessus du moyen d'acheminement (104; 204; 304; 404), et chaque glissière de guidage (101; 102; 201; 202; 301; 302; 401; 402) présentant un évidement dirigé vers le moyen d'acheminement (104; 204; 304; 404).

10. Utilisation d'un système de transport selon l'une des revendications précédentes pour assurer le transport de fermetures de bouteilles (212; 213; 312; 313; 412; 413) sur un moyen d'acheminement (104; 204; 304; 404).
